# EUROPEAN PATENT APPLICATION

(11) **EP 4 596 289 A1**
(43) Date of publication of application: **06.08.2025**
(21) Application number: 24154612.6
(22) Date of filing: 30.01.2024
(51) Int. Cl.: B60K 35/10, B60K 35/80, G06F 3/14

(54) **METHOD AND APPARATUS FOR CONTROLLING A DISPLAY OF A VEHICLE**

(71) Applicant: Bayerische Motoren Werke Aktiengesellschaft, 80809 München (DE)
(72) Inventor: Zaki, Tarek, 80805 München (DE); Smirnov, Mikhail, 82346 Andechs (DE)

(57) **Abstract**

The invention relates to a method, in particular a computer-implemented method, for controlling a display with a display area of a vehicle. The method comprises: (i) Receiving display data representing a position of the display area in an interior space of the vehicle; (ii) Receiving first sensor-based measurement data of a mobile electronic device representing a position and an orientation of the mobile electronic device; (iii) Determining the position and the orientation of the mobile electronic device with respect to the display area by using the first sensor-based measurement data and the display data; (iv) Pairing the mobile electronic device with the display, such that movements of the mobile electronic device are presented at the display area by using the determined position and the determined orientation, and that at least some functions which can be controlled via the display can be then controlled by the mobile electronic device via the display.

## Description

The present invention is directed to a, in particular computer-implemented, method and an apparatus for controlling a display of a vehicle. The invention is further directed to a vehicle and to a computer program.

Modern vehicles comprise an increasing number of functions and systems. These can include driving assistance systems, such as navigation systems, distance control systems or others. Further functions or program which relate to passengers, such as entertainment programs which can be presented by a display, seat adjustments or others, can also be implemented. Such functions can be controlled by displays of the vehicle, in particular by displays which are arranged in a front section, such as a centre information display (CID), which can be arranged in the area of a middle console of the vehicle. Therefore, such as display is in the reach of a driver and a co-driver which can control such a display. Modern vehicles can also comprise a so-called head-up-display (HUD) which can present visual content at a windscreen of the vehicle. Also, such a HUD can be controlled by the driver and the co-driver.

It is an object of the present invention to provide an improved way of controlling a display of a vehicle.

A solution to this problem is provided by the teaching of the independent claims. Various preferred embodiments of the present invention are provided by the teachings of the dependent claims.

A **first aspect** of the solution is directed to a method, in particular a computer-implemented method, for controlling a display with a display area of a vehicle. The method comprises: (i) Receiving display data representing a position of the display area in an interior space of the vehicle; (ii) Receiving first sensor-based measurement data of a mobile electronic device representing a position and an orientation of the mobile electronic device; (iii) Determining the position and the orientation of the mobile electronic device with respect to the display area by using the first sensor-based measurement data and the display data; (iv) Pairing the mobile electronic device with the display, such that movements of the mobile electronic device are presented at the display area by using the determined position and the determined orientation, and that at least some functions which can be controlled via the display can be then controlled by the mobile electronic device via the display.

Where the term "comprising" or "including" is used in the present description and claims, it does not exclude other elements or steps. Where an indefinite or definite article is used when referring to a singular noun e.g. "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "one" as used herein are defined in the sense of "one or more". The terms "another" and "a further" and any other variant thereof are to be understood in the sense of "at least one more".

The term "plural" as used herein shall be understood in the sense of "two or more".

The term "configured" or "set up" to perform a certain function (and respective variations thereof) as used herein shall be understood as meaning that the corresponding device is already present in a configuration or setting in which it can perform the function or that it is at least adjustable - i.e. configurable - in such a way that it can perform the function after corresponding adjustment. In this context, the configuration can be carried out, for example, by means of a corresponding setting of parameters of a process sequence or of switches or the like for activating or deactivating functionalities or settings. In particular, the device can have several predetermined configurations or operating modes, so that the configuration can be performed by means of a selection of one of these configurations or operating modes.

The term "mobile electronic device" as used herein means, in particular, a smartphone, a tablet computer or a mobile computer, each of which can include a touch-sensitive surface. Each of these in particular has one or more transmitter and receiver units for transmitting and receiving signals. In particular, the signals may comprise electromagnetic signals that are transmitted and received using a mobile radio standard, in particular a Bluetooth, WLAN or 2G, 3G, LTE or 5G standard. It is also conceivable that the signals are sent and received via a cable connection.

The term "display" as used herein means, in particular, an electronic device which can present a visual content such as text or images on a display area. Thereby such a display may comprise a sending and a receiving unit which are configured to emit and receive wireless signals, such as electromagnetic signals, and/or wire-based signals such as electrical signals.

The term "substantially" as used herein means in particular that regarding a value, in particular a maximum angle, does not deviate from this value by more than 10%, in particular not more than 5%.

In the following, certain preferred embodiments of the method will be described, which can be arbitrarily combined with each other or with other aspects of the present solution, unless such combination is explicitly excluded or technically impossible.

Accordingly, the method of the first aspect can enable to control a display of a vehicle by a mobile electronic device. Thereby a position and an orientation of the mobile electronic device with respect to the display is used. Controlling the display by a mobile electronic device is advantageous, because even users, i.e., passengers, which are out or reach of the display can control the display. In this way more flexibility in controlling the display can be reached, because each passenger can control the display and movements at the display area with their own mobile electronic device, for example a smartphone, can be presented.

In the following, certain preferred embodiments of the method will be described, which can be arbitrarily combined with each other or with other aspects of the present solution, unless such combination is explicitly excluded or technically impossible.

In some embodiments the mobile electronic device comprises a touch-sensitive surface, the method further comprises: (i) Receiving second sensor-based measurement data which represent a touching-gesture of a hand of a user to the touch-sensitive surface; (ii) Based on the second sensor-based measurement data, analysing a property of the touching-gesture with respect to the touch-sensitive surface; (iii) Based on the analysis characterising a movement of the touching-gesture relative to the touch-sensitive surface; (iv) Based on the characterised movement, selecting of an option provided by the display and presented at the display area, and/or receiving a content, in particular an icon or a picture, at the display from the mobile electronic device. By using the characteristic movement of the touching-gesture an option can selected more directly. In this way it may not be required to search for this option in a menu structure which is provided by the display and presented at the display area. Alternatively, or cumulatively a content can be moved to the display from the mobile electronic device. In this way a content of the mobile electronic device can be added to an already presented content at the corresponding display area. This enables an even more interactive use of the display.

In some embodiments the characterising of the movement comprises determining a direction of the touching-gesture. This enables in each case a more specific assignment of the movement to an option. Further it can enable that the direction itself can be transferred to the display showing this movement. This can be relevant in case of a direct interaction with an application presented at the display area.

In some embodiments the characterising of the movement comprises determining an acceleration distribution of the touching-gesture. This enables a more specific assignment of the movement to an option. Further it can enable that the acceleration itself can be transferred to the display showing this movement. This can be relevant in case of a direct interaction with an application presented at the display area.

In some embodiments the method further comprises determining an angle between a first orientation and a second orientation of the mobile electronic device, wherein at the first orientation the mobile electronic device is directed to a first position of the display area and at the second orientation the mobile electronic device is directed to a second position of the display area. This enables that a change of orientation of the mobile electronic device can be transferred to a movement at the display area within the determined angle. This enables a better control of a change of orientation of the mobile electronic device with respect to a presented movement at the display area.

In some embodiments the display data represents position data of a plurality of display areas of a corresponding plurality of displays of the vehicle, and the method further comprises: (i) Based on the determined direction of the mobile electronic device determining to which display area the mobile electronic device is directed to; (ii) Paring the mobile electronic device to that display of the plurality of displays which corresponds to that display area out of the plurality of display areas to which the mobile electronic device is directed to. This enables an intuitive use of the mobile electronic device for controlling the display. Because by directing or pointing the mobile electronic device to a display area out of the plurality of display areas the corresponding display is paired with the mobile electronic device and can be controlled by the electronic mobile device.

In some embodiments a change of pairing to another display occurs if the orientation of the mobile electronic device is changed so that the mobile electronic device is directed to another display area which corresponds to the other display which is then paired with the mobile electronic device. This enables a direct transition of pairing of the mobile electronic device from one display to another.

In some embodiments the display area has a rectangular shape and wherein the first position relates to a first corner of the rectangular display area and the second position relates to a second corner of the rectangular display area, and the first corner and the second corner are at opposite ends of a diagonal of the rectangular display area. This enables to determine a substantially maximum angle at which the mobile electronic device can present a movement at the display area related to a change of orientation of the mobile electronic device. A value of such a maximum angle could be determined by the geometric arrangement of the position of the mobile electronic device and its distance to the display area as well as the size of the display area including its length of the diagonal.

In some embodiments the display area comprises a plurality of sections, and wherein the control of at least one of the sections is enabled depending on a predetermined criterion, in particular a specific user or user profile. This can enable that for example a section which is facing a driver of the vehicle cannot be controlled a passenger. This can avoid that non-relevant information is presented at this section or that relevant information is removed from this section. At the same time, another section can be used by a passenger. Overall, using a plurality of sections depending on the criterion can enable are more flexible use of the display area.

In some embodiments the display data represents position data of a plurality of display areas of corresponding displays of the vehicle, comprising further: (i) Determining distances between the mobile electronic device and each of the display areas by using the position data of the mobile electronic device and the position data representing position data of the plurality of displays; (ii) Determining the shortest distance of the determined distances; (iii) wherein the pairing occurs with this display of the plurality of displays which relates to the shortest distance of its display area to the mobile electronic device. This can enable that the display of the plurality of displays is controlled which is closest to the mobile electronic device, and therefore close to the user of the mobile electronic device.

A **second aspect** of the solution is directed to an apparatus which is configured to perform the method of the first aspect.

In some embodiments the apparatus comprises: (i) A display with a display area, wherein the display is configured to provide display data representing a position of the display area in an interior space of the vehicle; (ii) A sensor which is configured to provide sensor-based measurement data of a mobile electronic device representing a position and an orientation of the mobile electronic device; (iii) A control unit, which is configured to: (iii-a) receive the display data; (iii-b) receive the sensor-based measurement data; (iii-c) determine the position and the orientation of the mobile electronic device with respect to the display area by using the first sensor-based measurement data and the display data; (iv) pair the mobile electronic device with the display, such that movements of the mobile electronic device are presented at the display area by using the deter-mined position and the determined orientation, and that at least some functions which can be controlled via the display can be then controlled by the mobile electronic device via the display.

A **third aspect** of the present solution is directed to a vehicle comprising an apparatus of the second aspect.

A **fourth aspect** of the present solution is directed to a computer-program with instructions for causing the apparatus of the second aspect to perform the steps of the method of the first aspect.

In particular, the computer program may be stored on a non-volatile medium. Preferably, this is a data carrier in the form of an optical data carrier or a flash memory module. This may be advantageous if the computer program as such is to be traded independently of a processor platform on which the one or more programs are to be executed. In another implementation, the computer program may be present as a file on a data processing unit, particularly a server, and downloadable via a data connection, such as the Internet or a dedicated data connection, such as a proprietary or local area network. In addition, the computer program may have a plurality of interacting individual program modules.

The various embodiments and advantages described above in connection with the first aspect similarly apply to the other aspects.

Further advantages, features and applications are provided in the following detailed description of preferred embodiments and the appended figures, wherein:
**Fig. 1** schematically illustrates a flowchart of an embodiment of a method;
**Fig. 2** schematically illustrates a top view of a vehicle and its interior space with a display assembly according to an embodiment; and
**Fig. 3** schematically illustrates a magnified front view of the display assembly of Fig. 2.

In the figures, identical reference signs are used for the same or mutually corresponding elements.

### DETAILED DESCRIPTION OF EMBODIMENTS

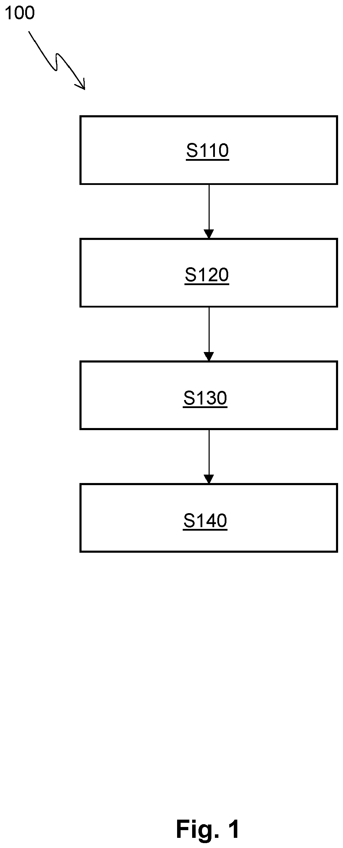

**Fig. 1** schematically illustrates a flowchart 100 of an embodiment of a method for controlling a head-up-display generator 230 for generating a head-up-display area 235 of a vehicle 200.

A first step S110 of the method comprises receiving display data representing a position of the head-up-display area 235 in an interior space of the vehicle 200.

A further step S120 of the method comprises receiving sensor-based measurement data of a mobile electronic device 270, in particular a smartphone, representing a position and an orientation of the mobile electronic device 270.

A further step S130 of the method comprises determining the position and the orientation of the mobile electronic device 270 with respect to the head-up-display area 235 by using the first sensor-based measurement data and the display data.

A further step S140 of the method comprises pairing the mobile electronic device 270 with the head-up-display generator 230 such that movements of the mobile electronic device 270 are presented at the head-up-display area 235 by using the determined position and the determined orientation, and that at least some functions which can be controlled via the head-up-display generator 230 can be then controlled by the mobile electronic device 270 via the head-up-display generator 230.

It is also possible to apply the described method to any of the other displays 240, 250 and their corresponding display areas 245, 255.

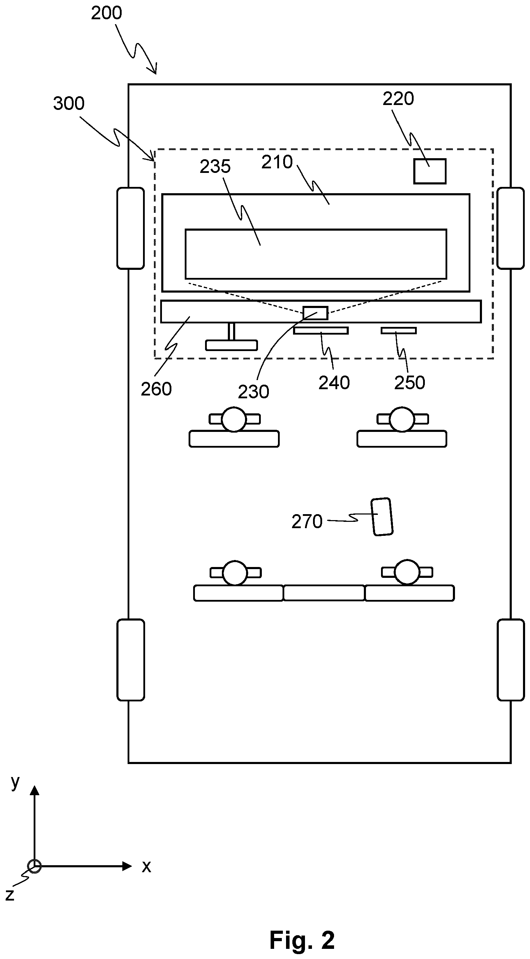

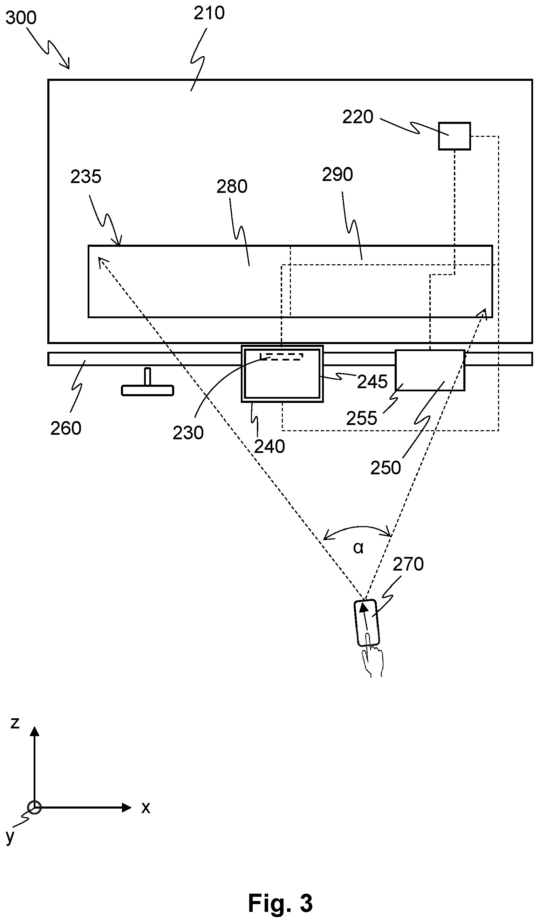

**Fig. 2** schematically illustrates a top view of a vehicle 200 and its interior space with a display assembly 300. The display assembly 300 comprises displays 230, 240, 250 with corresponding display areas 235, 245, 255 (see Fig. 3). A driving direction of the vehicle 200 is in y-direction of the shown coordinate system. The height of the vehicle 200 extends in z-direction, and the width of the vehicle 200 in x-direction. Specifically, the display assembly 300 comprises as display a head-up-display generator 230 for generating a head-up-display (HUD) area 235, in particular a panorama HUD, a so-called centre information display (CID) 240 with a centre information display area 245, which is arranged at a middle console (not shown here), and a further display 250 with a further display area 255, which is arranged at a dashboard 260 and at least partially faces a co-driver. The CID 240 and the further display 250 can be flat panel displays. Thereby the display areas 245, 255 of the CID 240 and the further display 250 are accordingly integrated into the CID 240 and the further display 250. The head-up-display area 235 is projected at a windscreen 210 of the vehicle 200 by a HUD-projector 230, which is indicated by the dashed lines emerging from the HUD-projector 230. The HUD-projector 230 is arranged in a dashboard 260.

The display assembly 300 further comprises a control unit 220, which can control the displays 230, 240, 250, and their corresponding display areas. Therefore, the displays 240, 250 and the HUD-projector 230 are connected to the control unit 220 such that electromagnetic and/or electrical signals can be exchanged between the control unit 220 and each of the displays 230, 240, 250. Accordingly, the displays 240, 250, the HUD-projector 230 and the control unit 220 each comprise suitable sending and receiving units (not shown here). In some embodiments, each display can comprises a control unit, and all these control units are then connected wired and/or wirelessly.

The display assembly 300 is illustrated magnified and in more detail in Fig. 3. For example, for reasons of a clear presentation the connections between the control unit 220 and the displays 230, 240, 250 are not shown in Fig. 2 but in Fig. 3.

Further a mobile electronic device 270, such as a smartphone, is arranged in the interior space of the vehicle 200. The mobile electronic device 270 comprises a sending and receiving unit (not shown here) which is configured to emit and receive wireless signals, such as electromagnetic signals, so that it can exchange signals with one ore more of the displays 230, 240, 250 via the control unit 220.

The control unit 220 further comprises a microprocessor which is configured to control the displays 230, 240, 250, and which is configured to evaluate and analyse received data from the displays 230, 240, 250.

The positions of the displays 230, 240, 250 are stored in a memory (not shown here) of the control unit 220. Thereby these positions each have been previously determined as relative positions with respect to other components which are arranged in the interior space of the vehicle 200.

Based on this a relative position of the mobile electronic device 270 to any of the displays 230, 240, 250 and in particular to their corresponding display areas 235, 245, 255 can be determined, for example by using a camera, which is arranged at the interior space, and which is common in modern vehicles. By using an algorithm which is configured to recognize the mobile electronic device 270 and to determine distances between known positions of components, such as the displays 230, 240, 250 and/or their corresponding display areas 235, 245, 255, in the interior space and the mobile electronic device 270 a relative position of the mobile electronic device 270 to these components can be determined. This is an exemplary method of how to determine a relative position of the mobile electronic device 270. There can be other methods for determining this relative position as well.

Further, the mobile electronic device 270 can comprise one or more acceleration sensors (not shown here). These can be used to determine an orientation of the mobile electronic device 270. The orientation of the mobile electronic device 270 can then be calibrated with respect to one of the displays 230, 240, 250, for example by directing the mobile electronic device 270 different corners of the respective display 235, 245, 255 and saving these different orientations as a width of operation.

**Fig. 3** schematically illustrates a magnified front view of the display assembly 300 of Fig. 2.

Thereby, the display areas 235, 245, 255 of the displays 230, 240, 250 extend essentially in an x-z-plane.

Additionally, in Fig. 3 the connections between each of the displays 230, 240, 250 and the control unit 220 are indicated by the corresponding dashed lines. The connections can be wired and/or wirelessly. For example, the connection between the mobile electronic device 270 and the control unit 220 can be wirelessly and the connection between the displays 230, 240, 250 and the control unit 220 can be wired.

Further the display area of the HUD 235 comprises a first section 280 and a second section 290. Thereby, the first section 280 to a large extent can face a driver of the vehicle 200, whereas the second section 290 to a large extent can face a co-driver of the vehicle. Thereby content which is relevant to the driver can be projected to the first section 280 and content which is relevant to the co-driver or other passengers in the vehicle can be projected to the second section 290.

Further, an angle α is shown which represents a movement of orientation of the mobile electronic device 270 between a top left corner and a right bottom corner of the display area of the HUD 235. This represents substantially a maximum angle α which can be covered by a change of orientation of the mobile electronic device 270, which is indicated by the dashed arrows emerging from the mobile electronic device 270 to the head-up-display area 235.

Further at the mobile electronic device 270 a touching-gesture of a hand is indicated. In the shown case the touching-gesture is directed towards the display assembly 300. However, the movement can be also in any other direction at the electronic mobile device. By analysing the toughing-gesture regarding its direction and/or acceleration, for example by analysing data representing a change of capacitance or induction at the area of the mobile electronic device 270 where the touching-gesture is applied, the direction of movement of a corresponding acceleration can be determined. Using this movement characteristic, such as a direction of movement or an acceleration of the movement, a direct interaction, in particular presentation of a movement at the corresponding display area 235, 245, 255 is possible.

While above at least one exemplary embodiment has been described, it has to be noted that a great number of variations thereto exists. Furthermore, it is appreciated that the described exemplary embodiments only illustrate non-limiting examples of how the present solution can be implemented and that it is not intended to limit the scope, the application or the configuration of the herein-described apparatus' and methods. Rather, the preceding description will provide the person skilled in the art with constructions for implementing at least one exemplary embodiment of the solution, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: Flowchart of an exemplary method
- S110: Receiving display data
- S120: Receiving sensor-based measurement data
- S130: Determining position and orientation
- S140: Pairing mobile electronic device with display

- 200: Vehicle
- 210: Windscreen
- 220: Control unit
- 230: Head-up-display projector
- 235: Head-up-display area
- 240: Centre information display
- 245: Centre information display area
- 250: Further display
- 255: Further display area
- 260: Dashboard
- 270: Mobile electronic device
- 280: First section
- 290: Second section

- 300: Display assembly
- α: Angle

## Claims

1. A Method for controlling a display (230, 240, 250) with a display area (235, 245, 255) of a vehicle (200) comprising:
Receiving display data representing a position of the display area (235, 245, 255) in an interior space of the vehicle (200);
Receiving first sensor-based measurement data of a mobile electronic device (270) representing a position and an orientation of the mobile electronic device (270);
Determining the position and the orientation of the mobile electronic device (270) with respect to the display area (235, 245, 255) by using the first sensor-based measurement data and the display data;
Pairing the mobile electronic device (270) with the display (230, 240, 250), such that movements of the mobile electronic device (270) are presented at the display area (235, 245, 255) by using the determined position and the determined orientation, and that at least some functions which can be controlled via the display (230, 240, 250) can be then controlled by the mobile electronic device (270) via the display (230, 240, 250).

2. The Method of claim 1, wherein the mobile electronic device (270) comprises a touch-sensitive surface, the method further comprises:
Receiving second sensor-based measurement data which represent a touching-gesture of a hand of a user to the touch-sensitive surface;
Based on the second sensor-based measurement data, analysing a property of the touching-gesture with respect to the touch-sensitive surface;
Based on the analysis characterising a movement of the touching-gesture relative to the touch-sensitive surface;
Based on the characterised movement, selecting of an option provided by the display (230, 240, 250) and presented at the display area (235, 245, 255), and/or receiving a content at the display from the mobile electronic device (270).

3. The Method of claim 2, wherein the characterising of the movement comprises determining a direction of the touching-gesture.

4. The Method of claim 2 or 3, wherein the characterising of the movement comprises determining an acceleration distribution of the touching-gesture.

5. The Method of any one of the preceding claims, comprising determining an angle (α) between a first orientation and a second orientation of the mobile electronic device (270), wherein at the first orientation the mobile electronic device (270) is directed to a first position of the display area (235, 245, 255) and at the second orientation the mobile electronic device (270) is directed to a second position of the display area (235, 245, 255).

6. The Method of claim 5, wherein the display area (235, 245, 255) has a rectangular shape and wherein the first position relates to a first corner of the rectangular display area (235, 245, 255) and the second position relates to a second corner of the rectangular display area (235, 245, 255), and the first corner and the second corner are at opposite ends of a diagonal of the rectangular display area (235, 245, 255).

7. The Method of any one of the preceding claims, wherein the display area (235, 245, 255) comprises a plurality of sections (280, 290), and wherein the control of at least one of the sections (280, 290) is enabled depending on a predetermined criterion.

8. The Method of any of claims 3 to 7, wherein the display data represents position data of a plurality of display areas (235, 245, 255) of a corresponding plurality of displays (230, 240, 250) of the vehicle (200), and the method further comprises:
Based on the determined direction of the mobile electronic device (270) determining to which display area (235, 245, 255) the mobile electronic device (270) is directed to;
Paring the mobile electronic device (270) to that display (230, 240, 250) of the plurality of displays (230, 240, 250) which corresponds to that display area (235, 245, 255) out of the plurality of display areas (235, 245, 255) to which the mobile electronic device (270) is directed to.

9. The Method of claim 8, wherein a change of pairing to another display (230, 240, 250) occurs if the orientation of the mobile electronic device (270) is changed so that the mobile electronic device (270) is directed to another display area (235, 245, 255) which corresponds to the other display (230, 240, 250), which is then paired with the mobile electronic device (270).

10. The Method of any one of the preceding claims, wherein the display data represents position data of a plurality of display areas (235, 245, 255) of corresponding displays (230, 240, 250) of the vehicle, and the method further comprises:
Determining distances between the mobile electronic device (270) and each of the displays by using the position data of the mobile electronic device and the position data representing position data of the plurality of displays (230, 240, 250);
Determining the shortest distance of the determined distances;
wherein the pairing occurs with this display of the plurality of displays (230, 240, 250) which relates to the shortest distance of its display area (235, 245, 255) to the mobile electronic device (270).

11. An Apparatus which is configured to execute the method according to one of the preceding claims.

12. The apparatus of claim 11, comprising:
A display (230, 240, 250) with a display area (235, 245, 255), wherein the display (230, 240, 250) is configured to provide display data representing a position of the display area (235, 245, 255) in an interior space of the vehicle (200);
A sensor which is configured to provide sensor-based measurement data of a mobile electronic device (270) representing a position and an orientation of the mobile electronic device (270);
A control unit (220), which is configured to:
receive the display data;
receive the sensor-based measurement data;
determine the position and the orientation of the mobile electronic device (270) with respect to the display area (235, 245, 255) by using the first sensor-based measurement data and the display data;
pair the mobile electronic device (270) with the display (230, 240, 250), such that movements of the mobile electronic device (270) are presented at the display area (235, 245, 255) by using the determined position and the determined orientation, and that at least some functions which can be controlled via the display (230, 240, 250) can be then controlled by the mobile electronic device (270) via the display (230, 240, 250).

13. A vehicle (200) comprising an apparatus of claim 11 or 12.

14. A Computer-program with instructions for causing the apparatus of claim 11 or 12 to perform the steps of the method of any one of claim 1 to 10.
